# EUROPEAN PATENT APPLICATION

(11) **EP 2 308 586 A1**
(43) Date of publication of application: **13.04.2011**
(21) Application number: 10176628.5
(22) Date of filing: 14.09.2010
(51) Int. Cl.: B01D 63/02

(54) **Tangential flow filtration apparatus**

(30) Priority: 01.10.2009 IT VR20090155
(71) Applicant: VELO Spa, 31030 Altivole (Treviso) (IT)
(72) Inventor: Velo, Antonio, 31030 Altivole (Treviso) (IT)
(74) Representative: Citron, Massimiliano

(57) **Abstract**

Tangential filtration apparatus for liquids, particularly for filtering juice extracted from fruit or vegetables, comprising an inlet duct (IN) conveying the liquid to be filtered; two or more tangential filtration modules (50) each provided with an inlet and a first outlet for the liquid to be filtered and a second outlet for the filtered liquid; and pumping means (56) to recirculate the liquid to be filtered in the modules from the first outlet to the inlet. The first outlet of at least one module is connected to feed the inlet of another module, so that these modules are connected in series.

## Description

### TECHNICAL FIELD OF THE INVENTION

The present invention refers to a tangential filtration apparatus for liquids, particularly for filtering juice extracted from fruit or vegetables, preferably wine, beer or products derived therefrom, which here are considered as main example.

### PRIOR ART

In order to separate the liquid part of a squeezed fruit juice from the solid part or to microfilter wine or beer, tangential filtration apparatuses are often used, in which the liquid is pushed inside tangential membrane filters. Such filters are formed by a bundle of porous tubular cannulae in which the liquid is pumped and from which the filtered product permeates on the side becoming clearer.

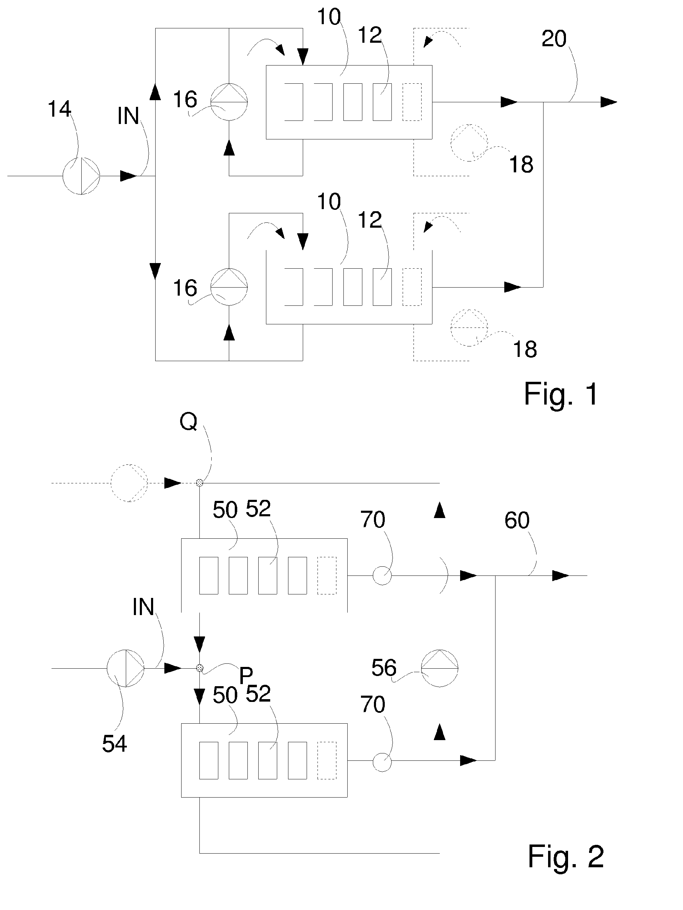

Fig. 1 schematically shows a known filtering apparatus equipped with two filtering units 10 having n filters 12 in parallel. The arrows indicate the direction in which the liquid flows in the ducts. A supply pump 14 pumps the liquid to be filtered towards the units 10, whereas two recirculation pumps 16 make the liquid circulate inside the units 10 themselves. In the past there was another pump 18 for each unit 10, but it was found that it could be eliminated without losing efficiency. From the modules 10 the filtered liquid is conveyed over an outlet duct 20. In this layout, the modules 10 are supplied in parallel from the pump 14.

The problem of the system in fig. 1 is its complexity, especially caused by the number of pumps, and consequently also the energy consumption.

### PURPOSES OF THE INVENTION

The main object of the invention is to simplify the aforementioned filtration system. Another purpose is to improve the energy yield thereof.

Such objects are achieved with a tangential filtration apparatus for liquids, particularly for filtering wine or beer, comprising:
- an inlet duct conveying the liquid to be filtered;
- two or more tangential filtration modules each provided with an inlet and a first outlet for the liquid to be filtered and a second outlet for the filtered liquid;
- pumping means to recirculate the liquid to be filtered in the modules from the first outlet to the inlet;
characterised in that the first outlet of at least one module is connected to feed the inlet of another module, so that such modules are connected in series.

The connection in series between modules makes it possible to reduce the number of pumping means and, surprisingly, to reduce the flow-rate and therefore the necessary power. There are the most advantages if the first outlet of every module is connected to feed the inlet of another module, so that all the modules are connected in series. One very advantageous variant - since it reduces the number of pumping means to one - is obtained when they are configured to recirculate the liquid to be filtered only from the first outlet of a module extreme in the series to the inlet of the other module extreme in the series. In other words, when the modules form a "chain" or a succession where the first outlet of one is connected to feed the inlet of the following one it is sufficient to draw the liquid from the terminal outlet and to pump it back into the module which has a non-linked inlet.

Another very advantageous variant is obtained if, for all the inputs that are not liquid injection node of the pumping means, the inlet duct is connected to the inlet of every module and to the first outlet of the module that precedes it in the series. This makes it possible to better equalize the flow-rates in the modules.

It has been found to be advantageous to use means for adjusting the pressure of the liquid at the second outlet of each module, with the purpose of equalizing the pressures inside the filtering modules so as to have an optimal yield. An optimal configuration is obtained if the means for adjusting the pressure of the liquid are adapted to adjust the pressure so as to generate a counterpressure at the outlet of every module which is decreasing as one moves away from the injection point of the pumping means.

The apparatus, in order to simplify control and management, may comprise sensor means for detecting flow-rates and/or pressures within it, and computing means adapted to drive the means for adjusting and/or the pumping means to adjust pressures and/or flow-rates within the apparatus to an established value. The pumping means are preferably configured or adjusted to recirculate the liquid to be filtered in the modules at a speed from 1 m/s to 1.9 m/s, preferably from about 1.4 m/s to 1.6 m/s; which are values that optimise the yield.

### BRIEF DESCRIPTION OF THE DRAWINGS

figure 1 schematically shows a known tangential filtration apparatus;
figure 2 schematically shows a tangential filtration apparatus according to the invention;
figure 3 shows some functional flow-rate values for the apparatus of fig. 2;
figure 4 shows some functional flow-rate values for a variant of the apparatus of fig. 2; ,
figure 5 shows some functional pressure values for a variant of the apparatus of fig. 2; ,
figure 6 shows some functional pressure values for the apparatus of fig. 2;
figure 7 schematically shows another tangential filtration apparatus according to the invention.

Fig. 2 shows a filtering apparatus for liquids according to the invention, for example for filtering wine, beer, or fruit juice, which can be used for finished or non-finished products.

It comprises two filtering units 50 having n filters 52 in parallel (n depends upon the power of the pumps involved). Again the arrows indicate the direction in which the liquid flows through the ducts. A single supply pump 54 pumps the liquid to be filtered to a main inlet IN of the apparatus towards the units 50, whereas there is only one recirculation pump 56 to make the liquid circulate inside the units 50 themselves. From the units 50, the filtered liquid is conveyed through a common outlet duct 60, preferably passing through adjusting means 70 of the pressure of the liquid, for example an electrovalve or a manual valve.

In this layout, the units 50 are fed in series by the pump 54, i.e. the non-filtered liquid outlet of every unit 50 feeds the inlet of a following unit 50. The pump 54 is used to make the non-filtered liquid recirculate throughout all the units 50. It should thus be clear that, with respect to fig. 1, one pump and all the associated consumption can be saved (the power involved is now half).

Even the yield of the apparatus is improved since the flow-rates can be lowered, from the usual 2 m/s to about 1.4 m/s to 1.6 m/s, preferably 1.5 m/s, thanks to the lower head losses. There are indeed some formulas that relate the head loss to the speed of the liquid, the diameter of the filters, turbulence, etc. Surprisingly, it has been found that the turbulence effects only slightly worsen decreasing the speed of the liquid inside the capillaries of the units, promoting energy saving. Half the power can be used thus halving the head loss by simply lowering the ordinary liquid flowing speed by 25% or more, thereby reducing by 50% the power used. Considering that the filtering surface is doubled by placing two units 50 in series, the power saving is about 70%. Since the speed on the wall of the capillaries decreases, and the dirt tends to deposit, this problem is easily solved by washing the membranes better.

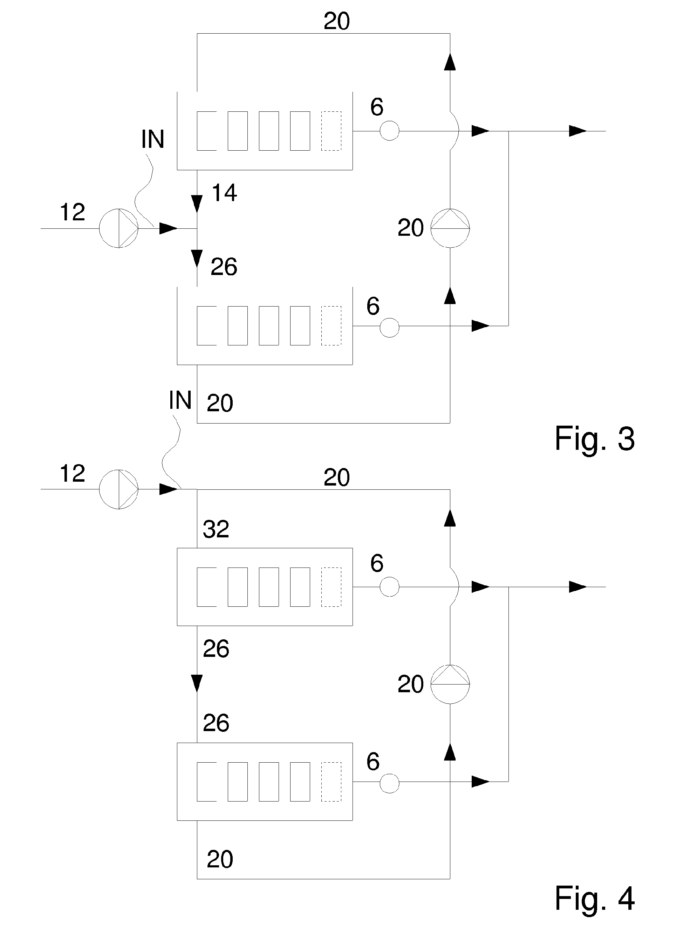

The pump 54 injects the liquid to be filtered into a node P in which the outlet of non-filtered liquid of the first unit 50, and the inlet of the second, flow together and meet. This configuration has many advantages with respect for example to the connection to the node Q (a possible variant of the invention). In order to understand why, see figs. 3 and 4, which show the flow-rates in m³/h in the various points of the circuit. In fig. 3 the averages between the input and output flow-rates of the non-filtered liquid which passes through every unit 50 are 17m³/h and 23 m³/h. In fig. 4, on the other hand, the averages are 29 m³/h and 23 m³/h, i.e. much higher for the same input flow-rates to the apparatus (12 m³/h) and for the same recirculation of the pump 54 (20 ₘ³/ₕ)_{.}

The units 50 are designed for a nominal flow-rate at which they operate excellently and that, if exceeded, can damage them. It should be clear how the configuration of fig. 3 ensures a working point that is closer to the nominal one, for example 20 m³/h. Depending on the type of liquid to be filtered it may not be efficient to have two units 50 that operate at different flow-rates, for example because in the one that receives the higher flow-rate (in fig. 4, 32 m³/h) the filters become dirty earlier, and the two units would have to be replaced at different times and not together, with two inconvenient machine stops instead of one. Finally, the high input flow-rate to the unit near to the inlet IN determines substantial head losses in the unit itself, and the modules that come after in the series operate worse due to the fact that the pressure is lower.

On the other hand, in fig. 4 the inlet of non-filtered liquid IN (i) is added to the flow-rates outputted by a unit 50 and compensates for the loss of filtered liquid, but (ii) is not added to the flow-rates of the recirculation pump, avoiding that the reequilibration of the flow-rate between one end and the other of the recirculation pump occurs exclusively inside the cascade of the modules 50. It should be noted that only in fig. 4 the average of the average flow-rate in the two units is 20 m³/h, i.e. that of the recirculation pump.

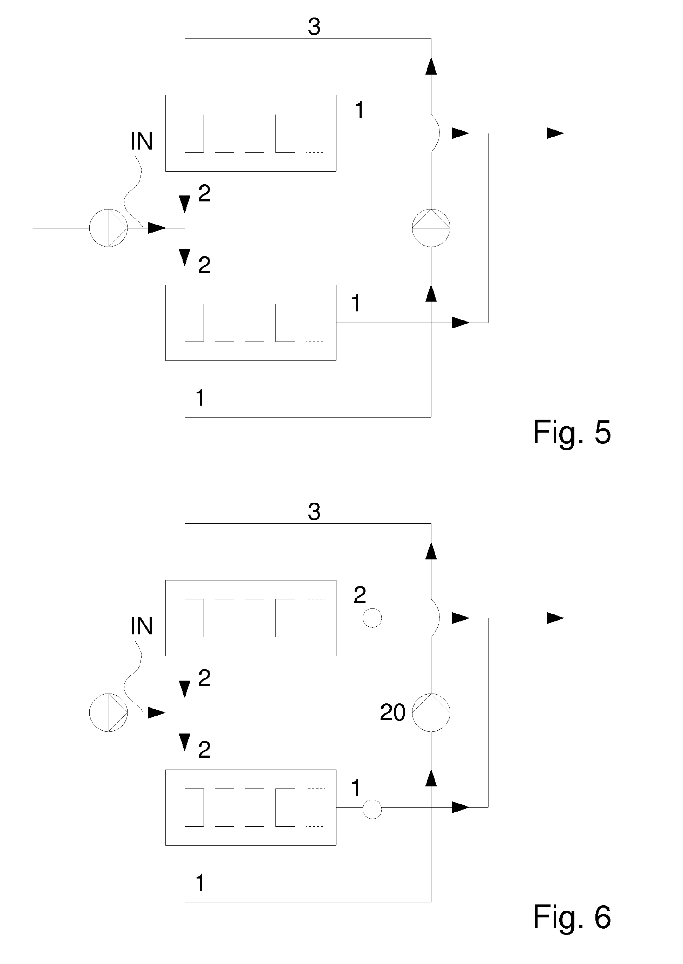

The means 70 have the effect of equalizing the pressure of the liquid inside the units 50, improving their yield. See figures 5 and 6, which show possible operating pressures (in bar) in the various points of the circuit. Every unit leads to a pressure reduction at the non-filtered liquid outlet due to head losses. In fig. 5 the pressure differences between inlet and outlet of the filtered product is different in the two units, and on one (2 bar) it may be too much.

The units 50 are designed for a nominal pressure at which the inner membranes operate excellently and that, if exceeded, can damage them. It should be clear how the means 70 of fig. 6 ensure a work-point under pressure that is closer to the nominal one, for example 2 bar. Moreover, in fig. 5 the unit having lower input pressure could operate little or not at all, or badly.

By adjusting the means 70 so as to give a sufficient counterpressure in the unit downstream of the recirculation pump, and to give a lower and small counterpressure in the other unit, the pressure differences are equalized.

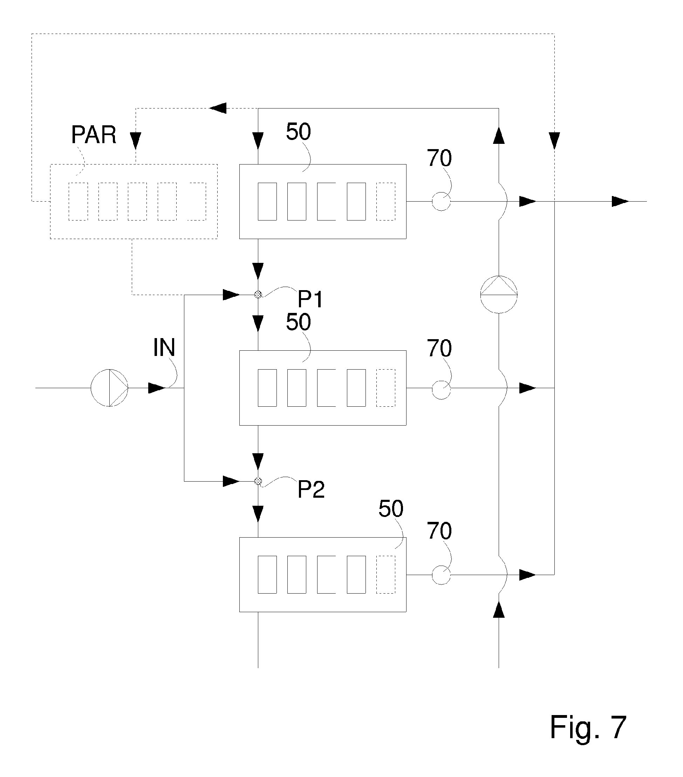

The invention is not limited to two single filtering units. For example, in fig. 7 an apparatus is shown with three units 50, in which the aforementioned general principles of the invention are applied. In this case the inlet of liquid IN to the units 50 preferably splits into two and connects at two nodes P1, P2 arranged between the two pairs of inner units 50 in the series. It could in any case only connect at one point. On the outlet of the filtered product, every unit 50 has a pressure adjustment means 70, adjusted to give a counterpressure that decreases as the relative module is placed further from the injection point of the recirculation pump. In this way at the inlet of the units 50 there are obtained pressure differences that are about the same. Energy is saved even in the case in which there are many filtering units, since the previous considerations remainvalid.

The flow-rates and/or the pressures within the apparatus can be detected by suitable sensors, and a processor (for example a PLC) may drive the means 70 and/or the pumps of the apparatus to adjust pressures and/or flow-rates on a predetermined reference.

It should be noted that the optimal system has been described, but nothing prevents mixed apparatuses from being used, with modules in series and in parallel in the same circuit, like for example the module PAR in the broken line in fig. 7.

## Claims

1. Tangential filtration apparatus for liquids, particularly for filtering juice extracted from fruit or vegetables, comprising:
- an inlet duct (IN) conveying the liquid to be filtered;
- two or more tangential filtration modules (50) each provided with an inlet and a first outlet for the liquid to be filtered and a second outlet for the filtrated liquid;
- pumping means (56) to recirculate the liquid to be filtered in the modules from the first outlet to the inlet ;
**characterized in that** the first outlet of at least one module is connected to feed the inlet of another module, so that these modules are connected in series.

2. Apparatus according to claim 1, **characterized in that** the first outlet of every module is connected to feed the inlet of another module, so that all modules are connected in series.

3. Apparatus according to claim 1 or 2, wherein the pumping means (56) are configured to recirculate the liquid to be filtered only from the first outlet of a module (50) extreme in the series to the inlet of the other module (50) extreme in the series.

4. Apparatus according to any one of the preceding claims, in which, for all inputs that are not a liquid injection node of the pumping means (56), the inlet duct (IN) is connected to every module (50) and to the first outlet of the module (50) that precedes it in the series.

5. Apparatus according to any one of the preceding claims, comprising means (70) for adjusting the pressure of the liquid at the second outlet of each module.

6. Apparatus according to claim 5, wherein the means (70) for adjusting the pressure of the liquid are adapted to adjust the pressure so as to generate at the outlet of each module a counterpressure which is decreasing as one moves away from the injection point of the pumping means (56).

7. Apparatus according to any one of the preceding claims, comprising sensor means for detecting flows and/or pressures within the apparatus, and computing means adapted to drive the means for adjusting (70) and/or the pumping means (56) to adjust pressures and/or flows within the apparatus at an established value.

8. Apparatus according to any one of the preceding claims, wherein the pumping means (56) are configured to recirculate the liquid to be filtered in the modules at a flow-rate of about 1m/s to 1.9 m/s.

9. Apparatus according to claim 8, wherein the pumping means (56) are configured to recirculate the liquid to be filtered in the modules at a rate-flow of about 1.4 m/s to 1.6 m/s.
